Europäisches Patentamt

European Patent Office

Office européen des brevets

(11) Publication number: **0 309 061**

**A1**

# (12) EUROPEAN PATENT APPLICATION

(21) Application number: **88202062.1**

(22) Date of filing: **22.09.88**

(51) Int. Cl.⁴: **B65G 47/91**

(30) Priority: **24.09.87 NL 8702277**

(43) Date of publication of application:
**29.03.89 Bulletin 89/13**

(84) Designated Contracting States:
**FR GB NL**

(71) Applicant: **Kaak, Stephanus Willibrordus**
**Varsseveldseweg 20a**
**NL-7061 GA Terborg(NL)**

(72) Inventor: **Kaak, Stephanus Willibrordus**
**Varsseveldseweg 20a**
**NL-7061 GA Terborg(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) **Suction inlet.**

(57) A resilient suction pad of a suction head for lifting objects that are weak at their centres and should not be damaged there, such as pastry, comprises according to the invention an additional suction pad (9) provided within the suction pad (8) in which a higher pressure prevails than in the area defined by the side edges of the pastry.

EP 0 309 061 A1

## Suction head

The invention relates to a suction head having a longitudinally resilient suction pad that is connected to a subatmospheric pressure conduit, so that an object can be lifted by creating subatmospheric pressure therein.

Such a suction head is known from Dutch patent specification 134,737. This known suction head is designed for lifting a load with a hole, such as a roll of paper. In this arrangement the hole is covered by a plate, suspended resiliently from the head, said plate having elastic ribs that create spaces that can be put under subatmospheric pressure by means of bores through the plate. Such a suction head is not suited for lifting objects that are weak at their centres and should not be damaged there, such as pastry.

The invention aims to improve the above-mentioned arrangement. According to the invention this has been attained in that within a bellows-shaped suction pad an additional bellows-shaped suction pad has been provided that is also longitudinally resilient, said additional suction pad being connected to an additional conduit in which a higher pressure prevails than in the surrounding, presently annular suction pad area.

This makes it possible to place a load on the pastry away from its centre, where the pastry is usually firmer due to its side edges.

The mouths of the bellows-shaped suction pads are preferably directed outwards. This is not only advantageous with generally spherical pastry, such as Dutch almond paste cakes, but also with respect to cleaning the involved parts.

The additional conduit may comprise a control valve, that can "squeeze" the conduit so as to exert, as it were, two different subatmospheric pressures on the object.

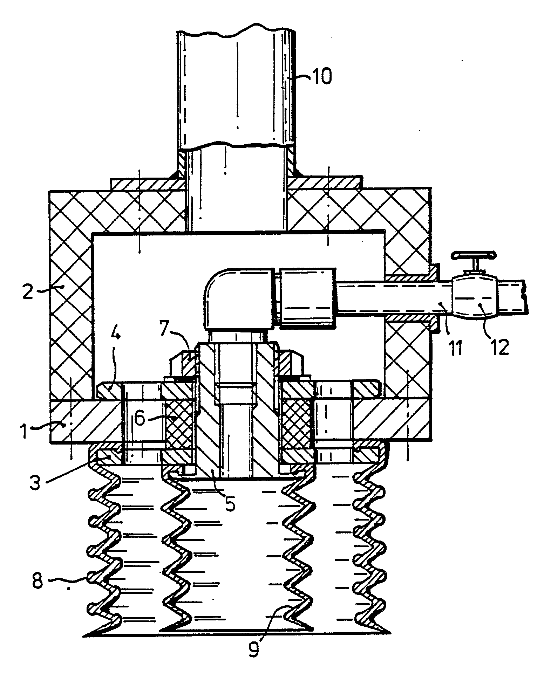

The invention will further be elucidated hereafter on the basis of the drawing, showing as an example a cross-section of a suction head according to the invention.

The suction head shown in the drawing comprises a base plate 1 having a passage and a hood 2,

With the aid of two apertured plates 3, 4 and sleeves 5-7 an outer suction bellows 8 and a suction bellows 9 incorporated therein are mounted in said bore.

Through the aperture in the base plate 1 and the holes in the aperture rings 3, 4 the annular space between the two bellows is connected to the inner space of the suction head.

A subatmospheric pressure conduit 10 is connected to the lid 2.

The sleeves 5 and 7 comprise screw thread in order to cooperate with one another, and the upper sleeve 7 is connected to an additional conduit 12 that is lead outside via an upright wall of the hood 2. This additional conduit 11 can be at atmospheric pressure or at another pressure exceeding the subatmospheric pressure in the subatmospheric conduit 10. Due to a valve 12 incorporated in the additional conduit 11 the flow of outside air can be "squeezed".

The shown suction head operates as follows:

when the suction head moves towards the object to be lifted, the bellows are pressed. In the area of the suction bellows 9 no or hardly any suction force will be exerted on the object, contrary to the annular area surrounding it.

By "squeezing" the valve 12 a stepped subatmospheric pressure can be created that most favourably matches the characteristics of the object to be lifted.

The bottom edges of the two bellows conically extend to broader dimensions, so that spherical products can also be lifted. This design furthermore has a cleansing effect due to the passing air flow.

Other embodiments than the one described above on the basis of the drawing are also possible within the scope of the claims. In this respect one should specifically think of rectangular and quadrangular bellows, so that products corresponding to those shapes can also be dealt with.

## Claims

1. Suction head having a longitudinally resilient suction pad that is connected to a subatmospheric pressure conduit, so that an object can be lifted by creating subatmospheric pressure therein, **characterized in that** within a bellows-shaped suction pad an additional bellows-shaped suction pad has been provided that is also longitudinally resilient, said additional suction pad being connected to an additional conduit in which a higher pressure prevails than in the surrounding, presently annular suction pad area.

2. Suction head according to claim 1 or 2, **characterized in that** the mouths of the bellows-shaped suction pads are directed outwards.

3. Suction head according to one of claims 1-3, **characterized in that** the additional conduit comprises a control valve.

4. Suction head as shown in the drawing and/or discussed on the basis thereof.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CH-A- 519 431 (MASCHINEN- UND STAHLBAU JULIUS LIPPERT) <br> * Whole document * <br> --- | 1,2,3,4 | B 65 G 47/91 |
| Y | US-A-4 561 688 (TSUTSUI) <br> * Column 2, lines 58-68; column 3, lines 1-49 * <br> --- | 1,2,3,4 | |
| A | US-A-2 998 256 (LIPKINS) <br> * Column 2, lines 45-48 * <br> --- | 3 | |
| A | GB-A-1 598 795 (WINDAK) <br> --- | | |
| A | DE-C- 866 324 (CREMER) <br> --- | | |
| A | FR-A-1 533 710 (PILKINGTON BROTHERS) <br> --- | | |
| A | DE-A-1 955 194 (HWM) <br> --- | | |
| A | FR-A-2 565 571 (FAGNIART ET LEMAIRE) <br> ----- | | |

| | TECHNICAL FIELDS SEARCHED (Int. Cl.4) |
|---|---|
| | B 66 C <br> B 65 G <br> B 65 B |

The present search report has been drawn up for all claims

| Place of search | Date of completion of the search | Examiner |
|---|---|---|
| THE HAGUE | 20-12-1988 | VAN DEN BERGHE E.J.J. |

EPO FORM 1503 03.82 (P0401)